# DEMANDE DE BREVET EUROPEEN

(11) **EP 1 881 684 A2**
(43) Date de publication de la demande: **23.01.2008**
(21) Numéro de dépôt: 07290696.9
(22) Date de dépôt: 05.06.2007
(51) Int. Cl.: H04M 1/725, H04M 1/60

(54) **Procédé de personnalisation d'un accessoire de communication téléphonique, tel qu'une oreillette**

(30) Priorité: 17.07.2006 FR 0606464
(71) Demandeur: Modelabs Technologies Limited, Hong Kong (HK)
(72) Inventeur: Gontard, Nicolas, Hong Kong (CN); Ponticelli, Guillaume, Hong Kong (CN)
(74) Mandataire: Chameroy, Claude

(57) **Abrégé**

La présente invention se rapporte à un procédé pour personnaliser un accessoire de communication téléphonique (10), tel qu'une oreillette, jumelé par une liaison sans fil Bluetooth avec un combiné téléphonique (30), tel qu'un téléphone cellulaire, caractérisé en ce qu'il consiste à contrôler à distance une fonctionnalité implantée dans une mémoire (19) d'un microprocesseur (18) prévu dans ledit accessoire de communication téléphonique (10), en envoyant une suite de caractères alphanumériques saisie par un utilisateur à l'aide du combiné téléphonique (30).

## Description

La présente invention concerne un procédé pour personnaliser un accessoire de communication téléphonique, tel qu'une oreillette, jumelé par une liaison sans fil Bluetooth avec un combiné téléphonique, tel qu'un téléphone cellulaire.

Dans le domaine des accessoires de communication téléphonique jumelés par une liaison sans fil Bluetooth avec un téléphone cellulaire, on connaît notamment les kits de communication pour véhicule ou les oreillettes. Ces dernières sont de plus en plus utilisées, que ce soit dans la rue, dans un véhicule, sur le lieu de travail ou chez soi.

Une oreillette permet à celui qui la porte sur son oreille de téléphoner en mode « main libre ». Pour cela, les données (signaux vocaux reçus et envoyés) transitent dans l'air par ondes radio à une fréquence déterminée selon la norme Bluetooth en vigueur qui est utilisée par les appareils communiquant entre eux.

En règle générale, les oreillettes de ce type sont munies de divers voyants lumineux donnant des informations sur leur état de fonctionnement (en veille, en mode communication, éteinte), d'un bouton d'augmentation du volume, d'un bouton de diminution du volume et d'un bouton de mise en route et d'extinction de l'appareil. Plus rarement, un petit écran pouvant afficher quelques caractères est présent, notamment pour visualiser un numéro de téléphone, le niveau de charge de la batterie ou d'autres informations propres au fonctionnement de l'oreillette, notamment lorsqu'elle est sur son support de charge associé.

La plupart des modèles actuels proposent une fonction particulièrement utile appelée renumérotation (ou « REDIAL ») qui permet de rappeler rapidement l'interlocuteur avec qui l'utilisateur vient de converser (appelé ou appelant) ou qu'il a tenté de joindre, sans avoir à composer son numéro, ce dernier étant automatiquement mis en mémoire après la précédente communication ou tentative de communication. A cet effet, il est courant d'utiliser l'un des boutons dont est munie l'oreillette, par exemple celui de mise en route, avec une pression plus ou moins prolongée pour que le numéro soit recomposé automatiquement. Cette fonctionnalité est très pratique car elle évite d'utiliser le téléphone cellulaire tout en conservant celui-ci à distance suffisante pour que la liaison Bluetooth soit active (une dizaine de mètres), par exemple dans un sac à main, une sacoche, sur une planche de bord de voiture, dans une poche de veste ou sur un bureau.

Cependant, cette fonction reste très basique, ce qui rend les oreillettes actuelles, et les accessoires similaires, assez limitées en terme de fonctionnalités proposées aux utilisateurs. Or, ces utilisateurs sont constamment en attente de nouveaux perfectionnements facilitant l'utilisation de leur oreillette.

Un but de la présente invention est donc de résoudre les problèmes cités précédemment à l'aide d'une solution simple à mettre en oeuvre, ergonomique, fiable et peu coûteuse.

Pour cela, l'invention propose de personnaliser l'accessoire de communication téléphonique de façon à paramétrer et/ou activer une fonctionnalité implantée dans l'oreillette qui pourra être utilisée ultérieurement de manière conviviale.

Plus précisément, la présente invention a pour objet un procédé pour personnaliser un accessoire de communication téléphonique, tel qu'une oreillette, jumelé par une liaison sans fil Bluetooth avec un combiné téléphonique, tel qu'un téléphone cellulaire, caractérisé en ce qu'il consiste à contrôler à distance une fonctionnalité implantée dans une mémoire d'un microprocesseur prévu dans ledit accessoire de communication téléphonique, en envoyant une suite de caractères alphanumériques saisie par un utilisateur à l'aide du combiné téléphonique.

Avantageusement, le contrôle à distance de la fonctionnalité consiste à envoyer à l'oreillette des paramètres de fonctionnement de ladite fonctionnalité à l'aide de la suite de caractères alphanumériques.

De préférence, le contrôle à distance de la fonctionnalité consiste à activer préalablement, à l'aide de la suite de caractères alphanumériques, une nouvelle fonctionnalité parmi plusieurs implantées dans la mémoire du microprocesseur, ladite suite de caractères alphanumériques correspondant au numéro de la fonctionnalité à activer et éventuellement à au moins un paramètre de fonctionnement associé à cette fonctionnalité.

Selon des modes de réalisation préférés de la présente invention :
- la suite de caractères alphanumériques saisie sur le téléphone se présente sous la forme suivante :
   X₀ ; X₁ ; X₂ ; ... ; Xₙ,
   X₀ étant un nombre entier correspondant au numéro de la fonctionnalité à activer, et X₂ à Xₙ étant une séquence de caractères alphanumériques correspondant au(x) paramètre(s) de fonctionnement associé(s) à ladite fonctionnalité ;
- au nombre entier X₀ ne correspond qu'une seule fonctionnalité activable à la fois dans l'accessoire de communication téléphonique ;
- le caractère X₁ est un caractère intermédiaire de séparation déterminé à l'avance et permettant à un logiciel, implanté dans le microprocesseur de l'accessoire de communication téléphonique, de distinguer, dans la suite de caractères alphanumériques qui lui est envoyée, le numéro de la fonctionnalité à activer et les paramètres de fonctionnement associés qui doivent être utilisés ;
- la suite de caractères alphanumériques saisie permet de changer la sonnerie retentissant lors d'un appel entrant ;
- la suite de caractères alphanumériques saisie permet d'activer la fonctionnalité consistant à changer un numéro préféré destiné à être enregistré dans la mémoire de l'accessoire de communication téléphonique ;
- la suite de caractères alphanumériques saisie permet de choisir la langue de reconnaissance vocale dans laquelle l'utilisateur prononce les numéros de téléphoner à composer ;
- le contrôle de la fonctionnalité consiste à remplacer une chaîne de caractères entrée sur le combiné téléphonique, lors d'une opération préalable de jumelage avec l'accessoire de communication téléphonique, par ladite suite de caractères alphanumériques ; et
- la chaîne de caractères entrée lors du jumelage correspond à un identifiant attribué de manière arbitraire par l'utilisateur au combiné téléphonique jumelé avec l'accessoire de communication téléphonique.

L'invention se rapporte également à un accessoire de communication téléphonique, tel qu'une oreillette, adapté pour être jumelé par une liaison sans fil Bluetooth avec un combiné téléphonique, tel qu'un téléphone cellulaire, caractérisé en ce qu'il comprend un microprocesseur muni d'une mémoire à l'intérieur de laquelle est stockée plusieurs fonctionnalités, ledit accessoire de communication téléphonique étant personnalisable à l'aide d'un procédé tel que défini précédemment.

La présente invention se rapporte en outre à l'utilisation d'un accessoire de communication téléphonique, tel qu'une oreillette, jumelé par une liaison sans fil Bluetooth avec un combiné téléphonique, tel qu'un téléphone cellulaire, l'accessoire étant muni de boutons de fonction et personnalisé à l'aide du procédé tel que défini précédemment, ladite utilisation étant caractérisée en ce qu'elle consiste à déclencher la fonctionnalité en utilisant uniquement lesdits boutons de fonction, sans se servir du combiné téléphonique avec lequel l'accessoire est jumelé.

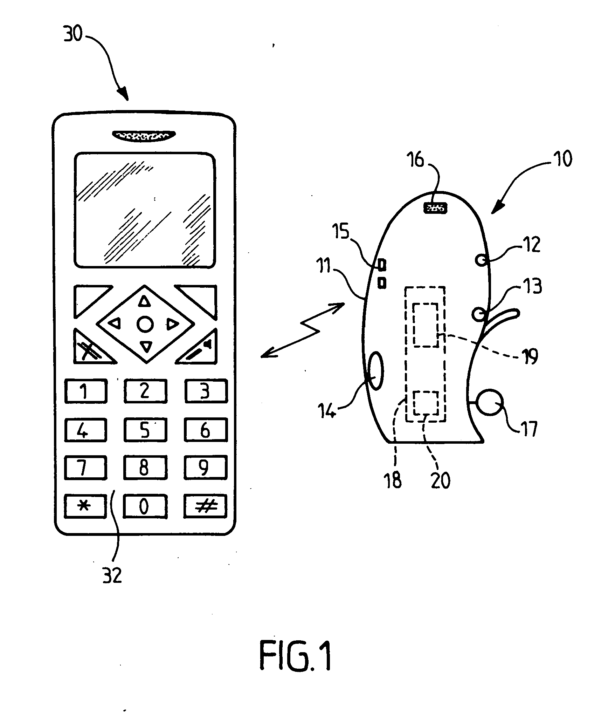

L'invention va maintenant être décrite plus en détail en référence à des modes de réalisation particuliers donnés à titre d'exemples uniquement et illustrés sur la figure 1 représentant de manière schématique un téléphone cellulaire jumelé avec une oreillette conforme à la présente invention.

Extérieurement, c'est-à-dire principalement d'un point de vue esthétique et ergonomique, l'oreillette 10 représentée sur la figure 1 ne présente pas de caractéristiques techniques différentes de celles des oreillettes connues. Elle comprend principalement une coque 11 en matière plastique en plusieurs parties, un bouton d'augmentation de volume 12 appelé « VOLUME + », un bouton de réduction de volume 13 appelé « VOLUME - », un bouton principal de mise sous tension 14 appelé « MARCHE/ARRET », des voyants 15 informant l'utilisateur du mode de fonctionnement de l'oreillette avec des codes de couleur appropriés, un microphone 16, un écouteur intra-auriculaire 17, un microprocesseur 18 muni d'une mémoire 19 et un émetteur/récepteur Bluetooth 20, conforme par exemple à la norme 2.0 EDR.

Pour que l'oreillette 10 selon la présente invention fonctionne, un logiciel particulier de traitement de données est préalablement implanté dès sa fabrication dans la mémoire 19 du microprocesseur 18. Ce logiciel est adapté pour interpréter, sous forme d'instructions exécutables par l'oreillette, une suite de caractères alphanumériques saisie sur un clavier 32 (mécanique ou virtuel) d'un téléphone cellulaire 30 jumelé avec l'oreillette 10.

La mémoire 19 de l'oreillette contient également une base de données de fonctionnalités programmées à l'avance et paramétrables à distance à l'aide du téléphone cellulaire 30, comme cela est décrit ci-après. Le nombre important de fonctionnalités activables n'étant quasiment limité que par la capacité de stockage de la mémoire 19 de l'oreillette 10, seules quelques-unes sont décrites ci-après de manière détaillée à titre illustratif.

Le principe de base du procédé de personnalisation de l'oreillette 10 selon la présente invention, qui consiste à activer une des fonctionnalités de la mémoire 19, repose sur l'utilisation de la chaîne de caractères alphanumériques utilisée par tout téléphone cellulaire lors de son jumelage avec un accessoire de téléphonie sans fil Bluetooth, tel qu'une oreillette dans le cas présent.

En règle générale, cette chaîne de caractères est un identifiant relativement simple à mémoriser ou à saisir sur le clavier 32 du téléphone cellulaire 30, tel que la marque et le modèle du téléphone, ou bien le nom du propriétaire du téléphone cellulaire. Ainsi, lors de la phase de jumelage de l'oreillette avec le téléphone, cet identifiant est échangé entre les deux appareils afin de les informer qu'ils sont jumelés de manière bidirectionnelle. Cet identifiant peut être modifié par l'utilisateur avant de réaliser le jumelage proprement dit (i.e. l'échange de diverses données, dont l'identifiant), ou bien être modifié après le jumelage, si l'utilisateur souhaite le changer car il ne le trouve plus à son goût ou pas assez explicite.

Une fois le jumelage effectué, l'oreillette 10 et le téléphone cellulaire 30 peuvent donc échanger des données de manière sécurisée, et notamment permettre la transmission sans fil des signaux vocaux d'une communication téléphonique du téléphone vers l'oreillette, et vice versa.

Pour effectuer la personnalisation de l'oreillette, il suffit ensuite à l'utilisateur de remplacer, à tout moment après avoir effectué l'opération de jumelage, cet identifiant par une suite de caractères alphanumériques différents.

Plus précisément, et selon le procédé conforme à la présente invention, cette suite de caractères correspond, une fois interprétée par le logiciel implanté dans le microprocesseur 18 de l'oreillette 10, à la fonctionnalité à activer parmi la liste disponible dans la mémoire 19 de l'oreillette, à au moins un paramètre de fonctionnement de la fonctionnalité en question, et éventuellement à un ou des caractère (s) de séparation permettant de distinguer la fonctionnalité des paramètres et à un caractère d'indication de fin.

En pratique, la suite de caractères alphanumériques saisie sur le clavier 32 du téléphone cellulaire 30 se présente sous la forme suivante :
X₀ ; X₁ ; X₂ ; ... ; Xₙ,
X₀ étant un nombre entier correspondant au numéro de la fonctionnalité à activer dans la mémoire 19 de l'oreillette 10, et X₁ à Xₙ étant une séquence de caractères alphanumériques correspondant au(x) paramètre(s) de fonctionnement associé(s) à ladite fonctionnalité et à d'éventuels caractères de séparation et d'indication de fin de séquence.

Plusieurs exemples d'application du procédé de personnalisation selon la présente invention sont maintenant décrits ci-après de manière détaillée, en référence à figure 1.

Ainsi, la première fonctionnalité que l'utilisateur peut choisir d'implanter pour personnaliser son oreillette consiste à modifier ou enregistrer au moins un numéro de téléphone favori dans la mémoire de l'oreillette afin de pouvoir le rappeler très facilement pas un simple appui sur un bouton, sans aucune manipulation directe du téléphone cellulaire. Cette fonctionnalité est sans doute l'une des plus utiles car elle est amenée à être très souvent utilisée.

Pour cela, l'utilisateur saisit la suite de caractères alphanumériques correspondant d'une part au numéro de la fonctionnalité à activer, c'est-à-dire le code X₀ approprié, et d'autres part aux paramètres de fonctionnement associés à cette fonctionnalité, à savoir des caractères de séparation, la position du numéro de téléphone à modifier dans la mémoire de l'oreillette, le numéro de téléphone en question et un indicateur de fin.

Ainsi, on considère dans l'exemple illustré que la mémoire de l'oreillette peut contenir des numéros de téléphone de quatre types, à savoir renumérotation du dernier numéro appelé/appelant (« REDIAL »), T₀, T₁ et T₂, ».

Le deuxième type de numéro accessible T₀ ne comprend aucun paramètre lorsque l'oreillette 10 est vendue, c'est-à-dire que cette partie de la mémoire 19 est vide en sortie d'usine. L'utilisateur final peut donc entrer à loisir un nouveau numéro pour l'enregistrer dans la mémoire 19 de l'oreillette 10. Il a également la possibilité de modifier ce numéro à tout moment.

Le troisième type de numéro accessible T₁ est un numéro de téléphone déjà préenregistré en usine lors de l'achat de l'oreillette 10, par exemple le numéro de la boite vocale de l'opérateur téléphonique choisi par l'abonné. Ce troisième type de numéro T₁ est également modifiable par l'utilisateur final selon la procédure décrite ci-après.

Enfin, le quatrième type de numéro accessible T₂ est également un numéro de téléphone entré en usine dans la mémoire 19 de l'oreillette 10, mais celui-ci ne peut pas être modifié. Il s'agit par exemple d'un numéro à composer en cas d'urgence.

Ainsi, la mémoire 19 de l'oreillette 10 peut contenir quatre types différents de numéros qui sont respectivement assignables automatiquement (REDIAL), enregistrables (T₀), prédéfinis et modifiables (T₁) ou prédéfinis mais non modifiables (T₂).

Dans le cas présent, la mémoire 19 de l'oreillette 10 contient quatre numéros ordonnés selon la liste REDIAL - T₀ - T₁ - T₂, étant par ailleurs précisé que REDIAL n'est pas reprogrammable mais change à chaque nouveau numéro appelé/appelant. Cela dit, la mémoire peut très bien contenir tout autre type de liste, telle que REDIAL - T₁ - T₁ - T₂, ou bien REDIAL - T₀ - T₁ - T₁, ou encore REDIAL - T₀ - T₀ - T₂.

Dans le cas présenté ci-dessus, qui sert d'illustration au procédé de personnalisation selon la présente invention, on considère que l'utilisateur souhaite remplacer le numéro de téléphone se trouvant en troisième position dans la mémoire 19 de l'oreillette 10, c'est-à-dire le numéro de sa boite vocale. Ce numéro est bien modifiable car il est de type T₁ selon la suite de numéros indiquée précédemment. Si l'utilisateur désire le remplacer par exemple par le numéro 0607080910, il doit alors saisir la séquence suivante sur le clavier 32 de son téléphone cellulaire 30 :
1#3#0607080910#

En effet, le premier nombre X₀ = 1 correspond bien au numéro de la fonctionnalité consistant à modifier un numéro de téléphone dans la mémoire 19 de l'oreillette 10.

Le deuxième caractère X₁ = # correspond au séparateur entre le numéro de la fonctionnalité à activer et les paramètres de fonctionnement associés à celle-ci.

Le troisième caractère X₂ = 3 correspond à la troisième position dans la suite de numéros de la mémoire 19 de l'oreillette 10. Dans le cas présent, il s'agit d'un numéro de type T₁, donc modifiable.

Le quatrième caractère X₃ = # est un autre séparateur.

Les caractères X₄ à X₁₃ correspondent au numéro de téléphone proprement dit à mettre dans la portion T₁ de la mémoire 19.

Le dernier caractère X₁₄ est un indicateur de fin de séquence, c'est-à-dire le caractère « # » dans le cas présent.

Bien entendu, ce numéro de téléphone est saisi selon la norme habituelle en vigueur en matière de téléphonie. Ainsi, dans le cas d'un numéro à l'étranger, il peut être utile d'ajouter, avant le numéro de téléphone, le caractère « + » puis l'indicatif du pays et/ou de la région.

Au final, le troisième numéro mis en mémoire dans l'oreillette 10 sera égal au numéro de téléphone 0607080910.

De même, si l'utilisateur souhaite par exemple entrer le numéro 0102030405 dans la deuxième position de la mémoire 19 de l'oreillette 10, qui correspond à un numéro non pré défini en usine de type T₀, il lui suffit de saisir la séquence suivante :
1#2#0102030405#

Une fois effectuée la mise en mémoire d'au moins un numéro de téléphone, l'utilisateur va pouvoir l'appeler rapidement et très facilement à l'aide d'un seul bouton de l'oreillette, sans avoir à utiliser son téléphone cellulaire, lequel peut ainsi rester dans sa poche, sur un support de planche de bord, dans un sac ou sur un bureau.

L'utilisateur a la possibilité d'utiliser l'un des trois boutons de fonction de l'oreillette 10. Dans le cas présent, l'utilisation de cette fonctionnalité est réalisée de la façon suivante, selon le numéro à joindre:

Pour rappeler le numéro précédemment appelé/appelant (« REDIAL »), il suffit à l'utilisateur d'appuyer pendant quelques instants (1 à 3 secondes par exemple) sur le bouton principal (marche/arrêt) 14, puis de relâcher celui-ci au moment où un signal sonore court (bip) est entendu. Le numéro enregistré dans cette partie de la mémoire de l'oreillette, c'est-à-dire le numéro appelé « REDIAL », est alors composé automatiquement, sans aucune manipulation du téléphone cellulaire.

Pour joindre le deuxième numéro mis en mémoire, qui est de type T₀, il suffit d'appuyer sur le bouton d'augmentation de volume 12 pendant par exemple une seconde, et de le relâcher au moment où un signal sonore court (bip) est entendu. Le numéro N₀ enregistré dans la mémoire est alors composé automatiquement.

Pour joindre le troisième numéro mis en mémoire, qui est de type T₁, il suffit d'appuyer sur le bouton d'augmentation de volume 12 pendant par exemple deux secondes, et de le relâcher au moment où deux signaux sonores courts (bip) sont entendus à la suite. Le numéro N₁ enregistré dans la mémoire est alors composé automatiquement.

Pour joindre le quatrième numéro mis en mémoire, qui est de type T₂, il suffit d'appuyer sur le bouton d'augmentation de volume 12 pendant par exemple trois secondes, et de le relâcher au moment où trois signaux sonores courts (bip) sont entendus. Le numéro N₂ enregistré dans la mémoire est alors composé automatiquement.

Concernant cette première fonctionnalité, le nombre de numéros pouvant être composés automatiquement est de quatre, mais il peut bien entendu être réduit ou augmenté par programmation en usine du logiciel, ou par reprogrammation ultérieure dudit logiciel par un spécialiste.

Dans un deuxième exemple, il s'agit d'activer la fonctionnalité n°2 (X₀ = 2) consistant à changer à distance la sonnerie retentissant lors d'un appel entrant.

Supposons que le téléphone cellulaire contienne une cinquantaine de sonneries différentes plus ou moins longues. Il est courant que les utilisateurs changent de sonneries au gré de leurs envies, de la mode du moment, de la période de la journée, etc. Des services payants spécialisés permettent d'ailleurs de télécharger un très grand nombre de nouvelles sonneries réactualisés fréquemment, dont certaines reprennent au moins partiellement les morceaux de musique qui passent le plus grand nombre de fois à la radio ou à la télévision. Si l'utilisateur souhaite que la sonnerie n° 12 retentisse désormais lorsqu'il reçoit un appel, il doit donc activer la fonctionnalité de changement de sonnerie, puis lui attribuer les paramètres correspondant à ce numéro de sonnerie et terminer par un indicateur de fin de séquence. Pour cela, il doit saisir sur le clavier de son téléphone cellulaire la séquence de caractères suivante :
2#12#

Ainsi, la nouvelle sonnerie n°12 retentira à chaque nouvel appel entrant, tant que l'utilisateur n'aura pas modifié celle-ci ou activé une autre fonctionnalité.

Il est intéressant de noter que cette fonctionnalité ne fait pas intervenir l'utilisation des boutons de l'oreillette une fois activée, contrairement à la fonctionnalité précédente.

Une autre fonctionnalité particulièrement intéressante peut être activée dans l'oreillette. Il s'agit de la fonctionnalité consistant à afficher en permanence le niveau de charge de la batterie de l'oreillette, correspondant dans le cas présent à la fonctionnalité n°5 (X₀ = 5). Dans ce cas, seuls deux paramètres différents peuvent être assignés à cette fonctionnalité : l'activation (paramètre A) ou la désactivation (paramètre D) de l'affichage. L'activation de cet affichage est utile notamment lorsque le chargeur de l'oreillette n'est pas disponible. Il est donc particulièrement intéressant de savoir où se trouve le niveau de charge de la batterie. En contrepartie, l'affichage occupe une place certaine sur l'afficheur de l'oreillette. Il peut alors être avantageux de désactiver cet affichage permanent et le remplacer par d'autres informations graphiques relatives au fonctionnement de l'oreillette.

La suite de caractères alphanumérique à saisir sur le clavier 32 du téléphone cellulaire 30 afin d'activer cette fonctionnalité est 5#A#.

Pour désactiver celle-ci, il suffit de saisir 5#D#.

Dans ce cas, lorsque la fonctionnalité sera activée, l'utilisateur souhaitant connaître l'état de charge de la batterie de l'oreillette devra par exemple appuyer deux fois de suite sur le bouton d'augmentation de volume 12. A ce moment, un signal sonore pourra être émis selon cet état de charge, par exemple un son aigu pour une pleine charge, un son grave pour une charge moyenne et deux sons graves pour une charge nulle.

Comme on peut le constater, l'utilisateur peut complètement redéfinir l'utilisation qu'il fait de son oreillette 10 en prenant en quelque sorte le contrôle à distance du téléphone cellulaire 30. La programmation est extrêmement simple, il suffit de connaître le numéro de la fonctionnalité à activer (nombre X₀) parmi une liste simple, puis de rentrer des paramètres qui sont définis de la manière la plus intuitive possible pour guider l'utilisateur (numéro de téléphone selon la nomenclature habituelle, lettre A pour l'activation et lettre D pour la désactivation d'une fonctionnalité, choix d'un paramètre dans une liste connue, par exemple de sonneries, etc.).

Par ailleurs, à chaque nombre X₀ saisi ne correspond qu'une et une seule fonctionnalité de sorte qu'il ne peut pas y avoir de confusion d'interprétation de la chaîne alphanumérique par l'oreillette 10 lors de l'activation de la fonctionnalité.

Certaines fonctionnalités implantées dans la mémoire du microprocesseur de l'oreillette ne font pas appel, une fois activées, à l'utilisation des boutons de l'oreillette. Il s'agit par exemple de fonctionnalités destinées simplement à modifier un état de l'oreillette, par exemple la remise à zéro de ses paramètres d'usine, l'activation de la synthèse vocale pour la composition orale des numéros ou encore la désactivation de la batterie de l'oreillette pour stocker celle-ci pendant une longue période.

Selon une variante de réalisation, l'utilisateur peut n'avoir qu'à saisir une suite de caractère alphanumériques correspondants simplement à au moins un paramètre d'une fonctionnalité unique implantée d'origine dans l'oreillette, sans avoir à activer au préalable cette fonctionnalité.

Par exemple, la mémoire 19 de l'oreillette peut contenir la fonctionnalité consistant à pouvoir choisir la langue dans laquelle l'utilisateur prononce le numéro de téléphone pour la commande vocale de composition automatique du numéro. Le seul paramètre à saisir sur le clavier 32 du téléphone cellulaire 30 est donc le choix de la langue en question, à l'aide d'un nombre correspondant à ladite langue.

Ainsi, si l'utilisateur souhaite prononcer en langue française les numéros à composer, il saisira par exemple le nombre 1 sur le clavier 32 du téléphone cellulaire 30 à la place de l'identifiant de jumelage, suivi par exemple du caractère « # » d'indicateur de fin de séquence. Le logiciel implanté dans le microprocesseur 18 de l'oreillette 10 interprétera alors cette suite de caractères de manière à passer en mode de reconnaissance vocale en langue française.

De même, si l'utilisateur souhaite épeler les numéros de téléphone en langue anglaise, il suffira par exemple de saisir la suite de caractères 2# sur le clavier 32 du téléphone cellulaire 30.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, le procédé selon la présente invention peut très bien s'appliquer à un kit mains libres de communication sans fil Bluetooth pour véhicule, ou à un autoradio proposant également une fonction de communication main libre et pouvant être jumelé avec un téléphone cellulaire.

Ainsi, parmi les autres fonctionnalités qui peuvent être activées à distance dans l'oreillette (une fois implantées dans la mémoire de celle-ci), puis utilisées par l'utilisateur, on peut citer :
- le changement du code PIN (« Personnal Identification Number » - « Code d'Identification Personnelle »), alors que ce code est normalement unique et implanté en sortie d'usine ;
- le mode économie d'énergie de la batterie (par désactivation de certains composants de l'oreillette gourmands en énergie) ;
- le réglage de la fréquence pour mettre plus ou moins de graves et d'aigus dans le son ;
- la définition de la matrice d'affichage si l'oreillette possède un écran ;
- le choix des informations affichées sur l'écran ;
- l'afflux temporaire d'énergie supplémentaire aux composants de l'oreillette sur une courte période ;
- le choix de la couleur des diodes électroluminescentes (DEL), leur rythme de clignotement ;
- l'entrée d'un code secret pour accéder à des fonctions spéciales ;
- l'activation/désactivation de l'accès aux fonctions spéciales ; et
- la fonction « débogage », pour mettre l'oreillette dans un état spécifique permettant de déclencher des traces pour analyser le logiciel implanté et de détecter d'éventuels dysfonctionnements.

## Revendications

1. Procédé pour personnaliser un accessoire de communication téléphonique (10), tel qu'une oreillette, jumelé par une liaison sans fil Bluetooth avec un combiné téléphonique (30), tel qu'un téléphone cellulaire, **caractérisé en ce qu'**il consiste à contrôler à distance une fonctionnalité implantée dans une mémoire (19) d'un microprocesseur (18) prévu dans ledit accessoire de communication téléphonique (10), en envoyant une suite de caractères alphanumériques saisie par un utilisateur à l'aide du combiné téléphonique (30).

2. Procédé selon la revendication 1, **caractérisé en ce que** le contrôle à distance de la fonctionnalité consiste à envoyer à l'oreillette des paramètres de fonctionnement de ladite fonctionnalité à l'aide de la suite de caractères alphanumériques.

3. Procédé de personnalisation selon la revendication 1, **caractérisé en ce que** le contrôle à distance de la fonctionnalité consiste à activer préalablement, à l'aide de la suite de caractères alphanumériques, une nouvelle fonctionnalité parmi plusieurs implantées dans la mémoire (19) du microprocesseur (18), ladite suite de caractères alphanumériques correspondant au numéro de la fonctionnalité à activer et éventuellement à au moins un paramètre de fonctionnement associé à cette fonctionnalité.

4. Procédé selon la revendication 3, **caractérisé en ce que** la suite de caractères alphanumériques saisie sur le combiné téléphonique se présente sous la forme suivante :
X₀ ; X₁ ; X₂ ; ... ; Xₙ,
X₀ étant un nombre entier correspondant au numéro de la fonctionnalité à activer, et X₂ à Xₙ étant une séquence de caractères alphanumériques correspondant au(x) paramètre(s) de fonctionnement associé(s) à ladite fonctionnalité.

5. Procédé selon la revendication 4, **caractérisé en ce qu'**à chaque nombre entier X₀ saisi ne correspond qu'une seule fonctionnalité activable à la fois dans l'accessoire de communication téléphonique (10).

6. Procédé selon la revendication 5, **caractérisé en ce que** le caractère X₁ est un caractère intermédiaire de séparation déterminé à l'avance et permettant à un logiciel, implanté dans le microprocesseur (18) de l'accessoire de communication téléphonique (10), de distinguer, dans la suite de caractères alphanumériques qui lui est envoyée, le numéro de la fonctionnalité à activer et les paramètres de fonctionnement associés qui doivent être utilisés.

7. Procédé selon la revendication 6, **caractérisé en ce que** la suite de caractères alphanumériques saisie permet d'activer la fonctionnalité consistant à changer la sonnerie retentissant lors d'un appel entrant.

8. Procédé selon la revendication 6, **caractérisé en ce que** la suite de caractères alphanumériques saisie permet d'activer la fonctionnalité consistant à changer un numéro préféré destiné à être enregistré dans la mémoire (19) de l'accessoire de communication téléphonique.

9. Procédé selon la revendication 2, **caractérisé en ce que** la suite de caractères alphanumériques saisie permet de choisir la langue de reconnaissance vocale dans laquelle l'utilisateur prononce les numéros de téléphoner à composer.

10. Procédé selon l'une quelconque des revendications précédentes, **caractérisé en ce que** le contrôle de la fonctionnalité consiste à remplacer une chaîne de caractères entrée sur le combiné téléphonique (30), lors d'une opération préalable de jumelage avec l'accessoire de communication téléphonique (10), par ladite suite de caractères alphanumériques.

11. Procédé selon la revendication 10, **caractérisé en ce que** la chaîne de caractères entrée lors du jumelage correspond à un identifiant attribué de manière arbitraire par l'utilisateur au combiné téléphonique (30) jumelé avec l'accessoire de communication téléphonique (10).

12. Accessoire de communication téléphonique (10), tel qu'une oreillette, adapté pour être jumelé par une liaison sans fil Bluetooth avec un combiné téléphonique (30), tel qu'un téléphone cellulaire, **caractérisé en ce qu'**il comprend un microprocesseur (18) muni d'une mémoire (19) à l'intérieur de laquelle sont stockées plusieurs fonctionnalités, ledit accessoire de communication téléphonique (10) étant personnalisable à l'aide d'un procédé selon l'une quelconque des revendications précédentes.

13. Utilisation d'un accessoire de communication téléphonique (10), tel qu'une oreillette, jumelé par une liaison sans fil Bluetooth avec un combiné téléphonique (30), tel qu'un téléphone cellulaire, l'accessoire étant muni de boutons de fonction (12 ; 13 ; 14) et personnalisé à l'aide du procédé selon l'une quelconque des revendications 1 à 11, **caractérisée en ce qu'**elle consiste à déclencher la fonctionnalité en utilisant uniquement lesdits boutons de fonction (12 ; 13 ; 14), sans se servir du combiné téléphonique (30) avec lequel l'accessoire (10) est jumelé.
